# EUROPEAN PATENT SPECIFICATION

(11) **EP 3 893 413 B1**
(45) Date of publication and mention of the grant of the patent: **16.08.2023**
(21) Application number: 19908221.5
(22) Date of filing: 30.12.2019
(51) Int. Cl.: H04L 12/12

(54) **DATA TRANSMISSION METHOD AND COMMUNICATION DEVICE**
DATENÜBERTRAGUNGSVERFAHREN UND KOMMUNIKATIONSVORRICHTUNG
PROCÉDÉ DE TRANSMISSION DE DONNÉES ET DISPOSITIF DE COMMUNICATION

(30) Priority: 07.01.2019 CN 201910011836
(43) Date of publication of application: 13.10.2021
(73) Proprietor: Huawei Technologies Co., Ltd., Shenzhen Guangdong 518129 (CN)
(72) Inventor: ZHU, Chunhui, Shenzhen, Guangdong 518129 (CN); WANG, Xuehuan, Shenzhen, Guangdong 518129 (CN); ZHANG, Xingxin, Shenzhen, Guangdong 518129 (CN)
(74) Representative: Isarpatent
(86) International application number: PCT/CN2019/130193
(87) International publication number: WO 2020/143498

(56) References cited:
- CN-A- 102 349 340
- CN-A- 102 883 314
- CN-A- 107 172 692
- US-A1- 2012 119 902

## Description

Priority is claimed to Chinese Patent Application No. 201910011836.4, filed with the China National Intellectual Property Administration on January 7, 2019, and entitled "DATA TRANSMISSION METHOD AND COMMUNICATIONS DEVICE".

### TECHNICAL FIELD

This invention relates to the communications field, and in particular, to data transmission methods and devices.

### BACKGROUND

In a network that is based on an energy efficient Ethernet (energy efficient Ethernet, EEE) mechanism and that is defined in the IEEE 802.3az standard, a sending device may control a send port of the sending device to switch between an active (active) state, a sleep (sleep) state, a quiet (quiet) state, a refresh (refresh) state, and a wake-up (wake) state. When data is sent, the sending device works in the active state. When no data needs to be sent, the sending device works in the quiet state to reduce power consumption and save energy.

However, the sleep state and the wake-up state are only transition states. The sending device needs to separately send sleep signaling and wake-up signaling in the sleep state and the wake-up state, both of which need to occupy resources. In addition, it is considered that for different network environments such as different path latencies or different service congestion, a receiving device can have enough time to parse the received sleep signaling and the received wake-up signaling, to adaptively switch a working state of the receiving device, for example, switch a working state of a receive port of the receiving device to a quiet state or an active state. Therefore, waiting duration with a fixed value and a relatively large margin needs to be set. In other words, when the sending device works in the quiet state and needs to send data, the sending device needs to first switch from the quiet state to the wake-up state, and then switch from the wake-up state to the active state to send the data. Consequently, this causes a relatively high data transmission latency, and is unfavorable to data transmission of latency-sensitive services such as voice and online video playing services. In addition, after sending the data, the sending device needs to switch to the quiet state. However, to switch from the active state to the quiet state, the sending device needs to first switch to the sleep state, and then switch to the quiet state. State switching is relatively frequent, and is unfavorable to power consumption reduction and energy saving. In contrast to the standard IEEE 15.3az relating to such state switching in the energy efficient Ethernet, each of US 2012/119 902 A1, CN 107 172 692 A, CN 102 349 340 A, and CN 102 883 314 A relate to a standard IEEE 802 15.6 relating to wireless communications using a fixed frame structure with a valid and an invalid portion.

### SUMMARY

The object of the present invention is to provide a data transmission method and a device, to effectively alleviate a resource waste and relatively high energy consumption that are caused by frequent switching between a plurality of states, reduce data transmission energy consumption, and increase data transmission efficiency. The attached independent claims solve this object and further advantageous embodiments and improvements of the invention are listed in the dependent claims.

According to the invention, a data transmission method is provided. The method includes: A first device determines a super frame. The super frame includes one idle period (period of idle, PI) and one or two active periods (period of active, PA), and the idle period is continuous with the one or two active periods. Then, the first device sends data in the one or two active periods, and enters a sleep state in the idle period.

According to this data transmission method, the first device can dynamically determine the idle period and the one or two active periods included in the super frame; and then sends the data in the one or two active periods, and enters the sleep state in the idle period, to reduce energy consumption. In other words, in one super frame, there are only two states: a working state (the active period) and a sleep state (the idle period), and there is no transition state. Therefore, resources occupied by the transition state and energy consumption of the transition state can be reduced, and a quantity of state switching times is relatively small (only once or twice). In this way, a resource waste and relatively high energy consumption that are caused by frequent switching between a plurality of states can be effectively alleviated, data transmission energy consumption can be reduced, and data transmission efficiency can be increased.

In a possible design method, the one active period is a first active period. Correspondingly, that the idle period is continuous with the one or two active periods may include: The first active period is continuous with the idle period, and the first active period is before the idle period.

Optionally, the first active period includes a reserved timeslot (reserved timeslot). The reserved timeslot is used to send constant-rate service data.

Further, the first active period includes a non-reserved timeslot (non-reserved timeslot). The reserved timeslot is continuous with the non-reserved timeslot, the reserved timeslot is before the non-reserved timeslot, and the non-reserved timeslot is used to send variable-rate service data.

Optionally, if the first device does not send the data in the non-reserved timeslot, the first device may enter the sleep state in advance, to further improve an energy saving effect.

In another possible design method, the two active periods are a first active period and a second active period. Correspondingly, that the idle period is continuous with the one or two active periods may include: Both the first active period and the second active period are continuous with the idle period, the idle period is between the first active period and the second active period, and the first active period is before the second active period.

Optionally, the second active period of the super frame is continuous with a first active period of a next super frame of the super frame.

Optionally, the first active period includes a non-reserved timeslot and does not include a reserved timeslot, and the second active period includes a reserved timeslot and does not include a non-reserved timeslot. The reserved timeslot is used to send constant-rate service data, and the non-reserved timeslot is used to send variable-rate service data.

In a possible design method, the super frame includes a control timeslot. The control timeslot is used to send control information of the super frame and/or control information of the next super frame of the super frame.

In addition, the control timeslot may be further used to send refresh/training signaling, operations, administration and maintenance (operations, administration and maintenance, OAM) information, and service data of a constant-rate service.

Optionally, the control timeslot is at least one earliest timeslot in the super frame.

In a possible design method, a frame length of the super frame may be determined according to at least one of a maximum latency of to-be-sent data or a link refresh cycle.

For example, the frame length of the super frame may be a smaller value in the maximum latency of the to-be-sent data and the link refresh cycle.

Optionally, the to-be-sent data may include a plurality of service types, and the plurality of service types respectively correspond to a plurality of maximum latencies. Correspondingly, the maximum latency of the to-be-sent data is a maximum latency with a smallest value in the plurality of maximum latencies.

According to the invention, another data transmission method includes: A second device receives, only in one or two active periods of a super frame, data sent by a first device, and enters a sleep state in one idle period of the super frame. The idle period is continuous with the one or two active periods.

According to this data transmission method, the second device can adaptively receive the data in the one or two active periods of the super frame, and enter the sleep state in the idle period, to reduce energy consumption. In other words, in one super frame, there are only two states: a working state (the active period) and a sleep state (the idle period), and there is no transition state. Therefore, resources occupied by the transition state and energy consumption of the transition state can be reduced, and a quantity of state switching times is relatively small (only once or twice). In this way, a resource waste and relatively high energy consumption that are caused by frequent switching between a plurality of states can be effectively alleviated, data transmission energy consumption can be reduced, and data transmission efficiency can be increased.

In a possible design method, the one active period is a first active period. Correspondingly, that the idle period is continuous with the one or two active periods may include: The first active period is continuous with the idle period, and the first active period is before the idle period.

Optionally, the first active period includes a reserved timeslot. The reserved timeslot is used to receive constant-rate service data.

Further, the first active period may include a non-reserved timeslot. The reserved timeslot is continuous with the non-reserved timeslot, the reserved timeslot is before the non-reserved timeslot, and the non-reserved timeslot is used to receive variable-rate service data.

Optionally, if the second device does not receive the data in the non-reserved timeslot, the second device enters the sleep state in advance, to further improve an energy saving effect.

In another possible design method, the two active periods are a first active period and a second active period. Correspondingly, that the idle period is continuous with the one or two active periods may include: Both the first active period and the second active period are continuous with the idle period, the idle period is between the first active period and the second active period, and the first active period is before the second active period.

Optionally, the second active period of the super frame is continuous with a first active period of a next super frame of the super frame.

Optionally, the first active period includes a non-reserved timeslot and does not include a reserved timeslot, and the second active period includes a reserved timeslot and does not include a non-reserved timeslot.

The reserved timeslot is used to receive constant-rate service data, and the non-reserved timeslot is used to receive variable-rate service data.

In a possible design method, the super frame includes a control timeslot. The control timeslot is used to receive control information of the super frame and/or control information of the next super frame of the super frame.

In addition, the control timeslot may be further used to receive refresh/training signaling, OAM information, and service data of a constant-rate service.

Optionally, the control timeslot is at least one earliest timeslot in the super frame.

According to the invention, a first device is provided, including a determining module, a control module, and a sending module. The determining module is configured to determine a super frame. The super frame includes one idle period and one or two active periods, and the idle period is continuous with the one or two active periods. The control module is configured to control the sending module to send data in the one or two active periods, and enter a sleep state in the idle period.

In a possible design, the one active period is a first active period. Correspondingly, that the idle period is continuous with the one or two active periods may include: The first active period is continuous with the idle period, and the first active period is before the idle period.

Optionally, the first active period includes a reserved timeslot. The reserved timeslot is used to send constant-rate service data.

Optionally, the first active period further includes a non-reserved timeslot. The reserved timeslot is continuous with the non-reserved timeslot, the reserved timeslot is before the non-reserved timeslot, and the non-reserved timeslot is used to send variable-rate service data.

Optionally, the control module is further configured to: if the sending module does not send the data in the non-reserved timeslot, control the sending module to enter the sleep state in advance, to further improve an energy saving effect.

In another possible design, the two active periods are a first active period and a second active period. Correspondingly, that the idle period is continuous with the one or two active periods may include: Both the first active period and the second active period are continuous with the idle period, the idle period is between the first active period and the second active period, and the first active period is before the second active period.

Optionally, the second active period of the current super frame is continuous with a first active period of a next super frame.

In a possible design, the first active period includes a non-reserved timeslot and does not include a reserved timeslot, and the second active period includes a reserved timeslot and does not include a non-reserved timeslot. The reserved timeslot is used to send constant-rate service data, and the non-reserved timeslot is used to send variable-rate service data.

In a possible design, the super frame includes a control timeslot. The control timeslot is used to send control information of the super frame and/or control information of the next super frame of the super frame.

In addition, the control timeslot may be further used to send at least one of refresh/training signaling, operations, administration and maintenance OAM information, and service data of a constant-rate service.

Optionally, the control timeslot is at least one earliest timeslot in the super frame.

In a possible design, a frame length of the super frame may be determined according to at least one of a maximum latency of to-be-sent data or a link refresh cycle.

For example, the frame length of the super frame may be a smaller value in the maximum latency of the to-be-sent data and the link refresh cycle.

Optionally, the to-be-sent data may include a plurality of service types, and the plurality of service types respectively correspond to a plurality of maximum latencies. Correspondingly, the maximum latency of the to-be-sent data is a maximum latency with a smallest value in the plurality of maximum latencies.

According to the invention, a second device is provided, including a receiving module and a control module. The control module is configured to control the receiving module to receive, only in one or two active periods of a super frame, data sent by a first device, and enter a sleep state in one idle period of the super frame. The idle period is continuous with the one or two active periods.

In a possible design, the one active period is a first active period. Correspondingly, that the idle period is continuous with the one or two active periods may include: The first active period is continuous with the idle period, and the first active period is before the idle period.

Optionally, the first active period includes a reserved timeslot. The reserved timeslot is used to receive constant-rate service data.

Further, the first active period may include a non-reserved timeslot. The reserved timeslot is continuous with the non-reserved timeslot, the reserved timeslot is before the non-reserved timeslot, and the non-reserved timeslot is used to receive variable-rate service data.

Optionally, if the second device does not receive the data in the non-reserved timeslot, the second device enters the sleep state in advance, to further improve an energy saving effect.

In another possible design, the two active periods are a first active period and a second active period. Correspondingly, that the idle period is continuous with the one or two active periods may include: Both the first active period and the second active period are continuous with the idle period, the idle period is between the first active period and the second active period, and the first active period is before the second active period.

Optionally, the second active period of the super frame is continuous with a first active period of a next super frame of the super frame.

Optionally, the first active period includes a non-reserved timeslot and does not include a reserved timeslot, and the second active period includes a reserved timeslot and does not include a non-reserved timeslot.

The reserved timeslot is used to receive constant-rate service data, and the non-reserved timeslot is used to receive variable-rate service data.

In a possible design, the super frame includes a control timeslot. The control timeslot is used to receive control information of the super frame and/or control information of the next super frame of the super frame.

In addition, the control timeslot may be further used to receive refresh/training signaling, OAM information, and service data of a constant-rate service.

Optionally, the control timeslot is at least one earliest timeslot in the super frame.

The disclosure here also describes that a communications device is provided, including a processor. The processor is coupled to a memory, and the memory is configured to store a computer program. The processor is configured to execute the computer program stored in the memory, so that the communications device performs the data transmission method according to any one of the first aspect or the possible implementations of the first aspect.

The disclosure here also describes that another communications device is provided, including a processor. The processor is coupled to a memory, and the memory is configured to store a computer program. The processor is configured to execute the computer program stored in the memory, so that the communications device performs the data transmission method according to any one of the second aspect or the possible implementations of the second aspect.

Also a communications system is described. The communications system includes one or more first devices and one or more second devices.

A readable storage medium is described which stores a program or an instruction. When the program or the instruction is run on a computer, the computer is enabled to perform the data transmission method according to any one of the first aspect or the possible implementations of the first aspect.

The disclosure also reveals that a readable storage medium is provided, and stores a program or an instruction. When the program or the instruction is run on a computer, the computer is enabled to perform the data transmission method according to any one of the second aspect or the possible implementations of the second aspect.

A computer program product is further described, including computer program code. When the computer program code is run on a computer, the computer is enabled to perform the data transmission method according to any one of the first aspect or the possible implementations of the first aspect.

Another computer program product includes computer program code. When the computer program code is run on a computer, the computer is enabled to perform the data transmission method according to any one of the second aspect or the possible implementations of the second aspect.

### BRIEF DESCRIPTION OF DRAWINGS

FIG. 1 is a schematic diagram of an architecture of a communications system according to an embodiment of this application;
FIG. 2 is a schematic diagram of state switching in an EEE mechanism-based data transmission method;
FIG. 3A is a schematic diagram of a frame structure of a physical frame that is in a refresh state and that carries no OAM information;
FIG. 3B is a schematic diagram of a frame structure of a physical frame that is in a refresh state and that carries OAM information;
FIG. 4 is a schematic flowchart of a data transmission method according to an embodiment of this application;
FIG. 5 is a schematic diagram of a frame structure of a super frame according to an embodiment of this application;
FIG. 6 is a schematic diagram of a configuration manner 1 of a reserved timeslot in a super frame according to an embodiment of this application;
FIG. 7 is a schematic diagram of a configuration manner 2 of a reserved timeslot in a super frame according to an embodiment of this application;
FIG. 8 is a schematic diagram of a configuration manner 3 of a reserved timeslot in a super frame according to an embodiment of this application;
FIG. 9 is a schematic diagram of state switching of two adjacent super frames according to an embodiment of this application;
FIG. 10 is a schematic diagram of a timeslot structure of a control timeslot according to an embodiment of this application;
FIG. 11 is a schematic structural diagram of a first device according to an embodiment of this application;
FIG. 12 is a schematic structural diagram of a second device according to an embodiment of this application; and
FIG. 13 is a schematic structural diagram of a communications device according to an embodiment of this application.

### DESCRIPTION OF EMBODIMENTS

The following describes technical solutions of this application with reference to accompanying drawings.

The technical solutions of the embodiments of this application may be applied to a plurality of communications systems, for example, an Ethernet network defined in the IEEE802.3az standard and based on an EEE mechanism, and a WLAN network defined in IEEE802.11.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompany drawings. In addition, a combination of these solutions may be used.

In addition, in the embodiments of this application, the terms such as "example" and "for example" are used to represent giving an example, an illustration, or a description. Any embodiment or design scheme described as an "example" or "for example" in this application should not be explained as being more preferred or having more advantages than another embodiment or design scheme. Exactly, "example" is used to present a concept in a specific manner.

In the embodiments of this application, "of (of)", "corresponding (corresponding, relevant)", and "corresponding (corresponding)" may be interchangeably used sometimes. It should be noted that meanings expressed by the terms are consistent when differences are not emphasized.

In the embodiments of this application, sometimes a subscript such as Wi may be written in an incorrect form such as W1. Expressed meanings are consistent when differences between them are not emphasized.

A network architecture and a service scenario described in the embodiments of this application are intended to describe the technical solutions in the embodiments of this application more clearly, and do not constitute a limitation on the technical solutions provided in the embodiments of this application. A person of ordinary skill in the art may know that: With evolution of the network architecture and emergence of new service scenarios, the technical solutions provided in the embodiments of this application are also applicable to similar technical problems.

An EEE system is used as an example for description in the embodiments of this application. It should be noted that the technical solutions provided in the embodiments of this application may be further applied to another communications system, for example, a WLAN system, and a corresponding name may also be replaced with a name of a corresponding function in the another communications system.

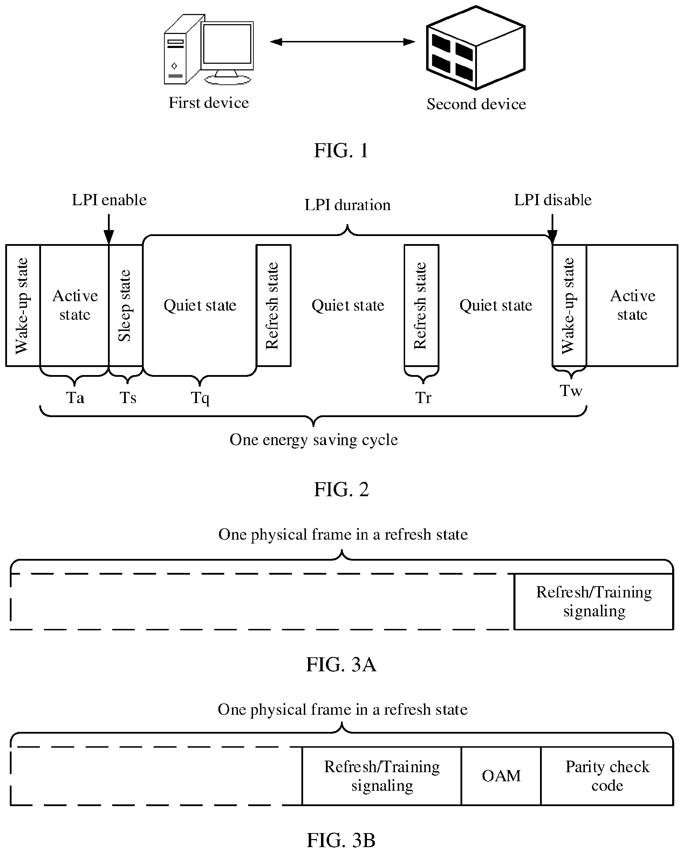

First, for ease of understanding the embodiments of this application, a communications system shown in FIG. 1 is used as an example to describe in detail a communications system to which the embodiments of this application are applicable. As shown in FIG. 1, the communications system includes a first device and a second device. The first device and the second device may be terminal devices or network devices, or one of the first device and the second device may be a terminal device, and the other is a network device. This is not limited in this application.

The network device may be a switching device, for example, a switch (an Ethernet switch) or a chip disposed in the switching device. The switching device includes but is not limited to a gateway (gateway, GW), for example, an access point (access point, AP) in a Wi-Fi system, a home router, a wireless relay node, a wireless backhaul node, a transmission reception point (transmission and reception point, TRP or transmission point, TP), an evolved NodeB (evolved Node B, eNB), a radio network controller (radio network controller, RNC), a NodeB (Node B, NB), a base station controller (base station controller, BSC), a base transceiver station (base transceiver station, BTS), or a home base station (for example, a home evolved NodeB, or a home Node B, HNB), or may be a gNB in a 5G system, for example, in an NR system.

The terminal device may be user equipment or a chip disposed in the user equipment. The terminal device includes but is not limited to: a laser radar device (lidar), a radar device (radar), a camera (camera), a personal computer (personal computer, PC), a client (client), a mobile phone (mobile phone), a tablet (Pad), a computer with a wireless transceiver function, a virtual reality (virtual reality, VR) terminal device, an augmented reality (augmented reality, AR) terminal device, a wireless terminal in industrial control (industrial control), and a wireless terminal in self-driving (self driving).

It should be noted that a data transmission method provided in this application is applicable to both a full-duplex (full-duplex, FD) network and a half-duplex (half-duplex, HD) network. This is not limited in this application.

The foregoing "full-duplex" means that the first device and the second device shown in FIG. 1 are used as local devices, and may receive data sent by the peer device while sending data to the peer device. The foregoing "half-duplex" means that the first device and the second device shown in FIG. 1 are used as local devices, and cannot receive data sent by the peer device when sending data to the peer device, or cannot send data to the peer device when receiving data sent by the peer device.

It should be noted that the communications system shown in FIG. 1 is an example of a communications system in which the first device is a terminal device, and the second device is a network device. Actually, the first device may alternatively be a network device, and the second device may alternatively be a terminal device. In other words, the communications system shown in FIG. 1 may be used for communication between terminal devices, or may be used for communication between a terminal device and a network device, or may be used for communication between network devices. This is not limited in the embodiments of this application.

It should be understood that FIG. 1 is merely a simplified schematic diagram of an example for ease of understanding. The communications system may further include another network device and/or another terminal device that are/is not shown in FIG. 1.

The communications system that is shown in FIG. 1 and in which the first device is a sending device and the second device is a receiving device is used below as an example to describe an existing EEE mechanism-based data transmission method in detail.

FIG. 2 is a diagram of state switching in an EEE mechanism-based data transmission method.

With reference to FIG. 1, as shown in FIG. 2, in a process in which the first device performs the foregoing EEE mechanism-based data transmission method to send data, port states of the device may sequentially switch between the following states:

Active state: An Ethernet port is in a normal working state.

In this case, the first device sends data to the second device. As shown in FIG. 2, duration Ta (time of active, Ta) of the state may be determined based on an amount of to-be-sent data in a current energy saving cycle (which may also be referred to as a data transmission cycle). For example, Ta may be a quantity of physical frames (physical frame, PHY) occupied by the to-be-sent data, for example, a quantity of forward error correction (forward error correction, FEC) frames.

A sleep state is a transition state in which the port enters the following quiet state from the active state.

If the data in the current energy saving cycle has been sent, the foregoing sending port may switch from the active state to the sleep state based on upper-layer signaling, for example, low power idle (low power idle, LPI) enable (assert) signaling.

In this case, the port needs to notify the peer device that the port is to enter the sleep state, for example, send the LPI enable signaling to the peer device.

Duration Ts (time of sleep) of the state is specified by a protocol. For example, the duration Ts is 200 to 220 microseconds (microsecond) in 100BASE_TX.

Quiet state: Ethernet ports at both ends of a link are in the quiet state in a low power consumption mode.

A time Tq (time of quiet, Tq) at which the port is in the state is specified by a protocol. For example, the time Tq is 20000 to 22000 microseconds in 100BASE-TX.

A refresh state is a state in which the port sends a particular signal to refresh a state of the link. Duration Tr (time of refresh) of the state is specified by a protocol. For example, the duration Tr is 200 to 220 microseconds in 100BASE_TX.

A wake-up state is a transition state in which the port enters the active state after waking up from the quiet state. For example, when there is to-be-sent data, the port switches from the quiet state to the wake-up state based on the upper-layer signaling, for example, LPI disable (de-assert) signaling. Duration Tw (time of wake) of the state is specified by a protocol. For example, the duration Tw is 200 to 220 microseconds in 100BASE_TX.

The prior art further provides a method for transmitting OAM information in a refresh state based on an EEE mechanism, to transmit the OAM information at a low speed without exiting a sleep state, so as to save energy to an extent. FIG. 3A is a schematic diagram of a frame structure of a physical frame that is in a refresh state and that transmits no OAM information. As shown in FIG. 3A, refresh/training signaling (refreshing/training signaling) carried in the physical frame in the refresh state is carried in a latter part of the physical frame and is aligned with a frame trailer of the physical frame.

FIG. 3B is a schematic diagram of a frame structure of a physical frame that is in a refresh state and that carries OAM information. As shown in FIG. 3B, the OAM information carried in the physical frame and a parity (parity) check code corresponding to the OAM information are located after refresh/training signaling, and a last bit (bit) of the parity check code is aligned with a frame trailer of the physical frame.

However, the data transmission methods shown in FIG. 2 and FIG. 3B both involve frequent state switching (if the state is not switched, the state is always the active state, resulting in excessively high energy consumption). In addition, in a state switching process, the sleep state and the wake-up state also cause additional overheads and energy consumption.

In addition, in the data transmission methods shown in FIG. 2 and FIG. 3B, once transmission capabilities of a sending device and a receiving device are determined, in an LPI state, the duration of the quiet state and the duration of the refresh state are fixed. Correspondingly, a moment at which the receiving device receives or detects refresh/wake-up signaling (refresh/wake-up signaling) is also fixed. Therefore, when service data arrives, it is assumed that the sending device is in a quiet state in an LPI mode, and the service data cannot be sent by using the physical frame in the refresh state until a refresh/wake-up moment arrives, or the service data is sent after wake-up signaling is sent and the active state is entered. This easily causes a relatively high latency, and is unfavorable to transmission of a latency-sensitive service.

To address the foregoing problems, an embodiment of this application provides a data transmission method. Detailed descriptions are provided below.

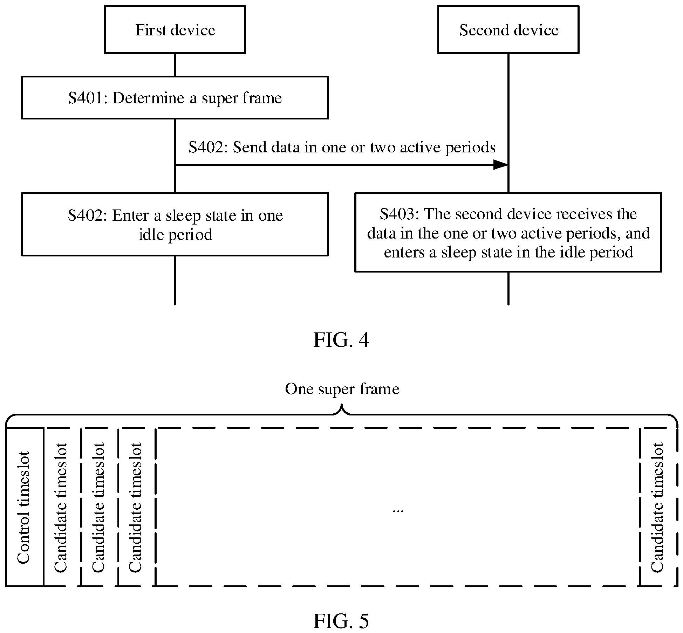

FIG. 4 is a schematic flowchart of a data transmission method according to the invention. The data transmission method may be applied to the communications system shown in FIG. 1. As shown in FIG. 4, the method includes steps S401 to S403.

S401: A first device determines a super frame.

The super frame includes one idle period and one or two active periods, and the idle period is continuous with the one or two active periods.

According to the invention, S401 in which the first device determines the super frame includes the following steps 1 to 3.

Step 1: Determine, based on a service type of to-be-sent data, a maximum latency corresponding to the to-be-sent data.

The service type of the to-be-sent data may include, for example, voice, video on demand/downloading, web page browsing, an online game, and file transfer. Technical indicators, such as a maximum latency, a minimum data rate, and a packet loss rate, required for data transmission of different service types are usually determined based on actual requirements of the different service types. For example, a voice service is relatively sensitive to a latency, and therefore requires a relatively small transmission latency, for example, 20 milliseconds. However, the voice service has a relatively small data amount, and therefore, a minimum data rate required by the voice service is relatively low, for example, 40 kilobits per second (kilobits per second, Kbps). For another example, a real-time video on-demand service has a relatively high requirement on both a transmission latency and a data rate, and therefore, a required maximum latency is relatively small and a required minimum data rate is relatively high. For still another example, a file transfer service requires that file content be transmitted accurately, and therefore has a relatively high requirement on a packet loss rate, but does not have a high requirement on a transmission latency.

It should be understood that the to-be-sent data may include a plurality of service types, and the plurality of service types may respectively correspond to a plurality of maximum latencies. The maximum latency corresponding to the to-be-sent data is usually a maximum latency with a minimum value in the plurality of maximum latencies.

Step 2: Determine a smaller value in the maximum latency and a link refresh cycle as a maximum frame length of the super frame.

A second device needs to receive, within a specific time period, at least one packet sent by the first device, to maintain a link from the first device to the second device. The time period is a first device-> second device link refresh cycle. Correspondingly, a time period for a link in a reverse direction is a second device->first device link refresh cycle. It may be understood that the first device->second device link refresh cycle and the second device->first device link refresh cycle may be different, and are separately configured. Correspondingly, the step of determining the smaller value in the maximum latency and the link refresh cycle as the maximum frame length of the super frame may be specifically implemented as:
determining, as the maximum frame length of the super frame, a minimum value in the plurality of maximum latencies respectively corresponding to the plurality of service types and a link refresh cycle in a service transmission link direction.

For example, if maximum latencies required by service types A and B are respectively 2 milliseconds and 1.5 milliseconds, and a link refresh cycle is 1.1 milliseconds, the frame length of the super frame is 1.1 milliseconds.

Step 3: Determine an actual frame length, a timeslot length, and a quantity of timeslots of the super frame based on a data packet size of the to-be-sent data and the maximum frame length.

Optionally, to avoid a resource waste, a greatest common divisor of a plurality of data packet sizes respectively corresponding to the plurality of service types may be determined as the timeslot length of the super frame.

For example, it is assumed that data packet sizes of the service types A and B are respectively 1500 bytes (bytes) and 500 bytes, and corresponding data transmission times are respectively 120 microseconds and 40 microseconds, it may be determined that the timeslot length is 40 microseconds. Correspondingly, one data packet of the service type B may be transmitted in one data timeslot, and one data packet of the service type A may be transmitted in three consecutive data timeslots.

Further, it may be determined that the actual frame length of the super frame is 1 millisecond, and includes 250 timeslots in total.

It may be understood that when the greatest common divisor of the data packet sizes respectively corresponding to the plurality of service types is not 1 byte, a timeslot length with highest resource utilization may be determined as an actual timeslot length, to determine the actual frame length of the super frame and the quantity of timeslots included in the super frame. Details are not described herein again.

After step 1 to step 3, configuration parameters such as the actual frame length, the timeslot length, and the quantity of timeslots of the super frame that are used by a sending device to send data to a receiving device may be determined.

For example, FIG. 5 is a schematic diagram of a frame format of a super frame. As shown in FIG. 5, one super frame includes one control timeslot and one or more candidate timeslots.

The candidate timeslot may be used to send data. It is easily understood that, for a super frame, an amount of to-be-sent data may be determined before a frame header moment of the super frame, and a quantity of candidate timeslots used for data transmission in the super frame, namely, a quantity of data timeslots (data timeslot), is determined based on the amount of the to-be-sent data. Correspondingly, a candidate timeslot not used for data transmission is referred to as an idle timeslot (idle timeslot).

It should be noted that, when a relatively small amount of data needs to be sent in one super frame, only some candidate timeslots are occupied. In other words, the quantity of data timeslots is less than the quantity of candidate timeslots. However, when a relatively large amount of data needs to be sent in one super frame, all candidate timeslots may be occupied. In other words, the quantity of data timeslots is equal to the quantity of candidate timeslots.

In addition, the data timeslot may be used to transmit service data of a constant-rate service and/or service data of a variable-rate service. The constant-rate service is a service whose data rate basically remains unchanged in a specified time period, for example, a video service of a surveillance camera. In other words, in the specified time period, the constant-rate service definitely occurs. Therefore, to ensure transmission of the constant-rate service, a specific quantity of reserved timeslots may be configured for the constant-rate service. The reserved timeslot is usually a same timeslot in different super frames.

It should be noted that a rate of the constant-rate service is not completely fixed, and may fluctuate in a small range. For example, data that fails to be transmitted in a previous cycle is retransmitted. The variable-rate service is characterized by abruptness, and a service generation rate is relatively random, and greatly fluctuates in different timeslots. The reserved timeslots may be insufficient to complete transmission of all constant-rate service data. In this case, remaining constant-rate service data may be placed in non-reserved timeslots for sending; or when there are remaining reserved timeslots, the variable-rate service may alternatively be placed in the reserved timeslots for sending, to avoid a waste. In a non-reserved timeslot, if there is no data to be transmitted, the receiving device and the sending device may enter a sleep state in advance, to reduce energy consumption.

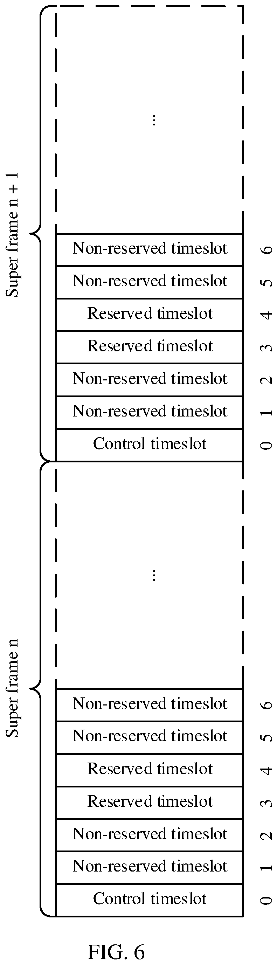

For example, as shown in FIG. 6, two timeslots numbered 3 and 4 in both a super frame n and a super frame n + 1 are reserved for transmitting service data of a constant-rate service. Certainly, when there are a plurality of constant-rate services, a specific quantity of reserved timeslots may also be configured for each constant-rate service. Details are not described herein again.

Further, a first active period includes a non-reserved timeslot. A reserved timeslot is continuous with the non-reserved timeslot, the reserved timeslot is before the non-reserved timeslot, and the non-reserved timeslot is used to send variable-rate service data.

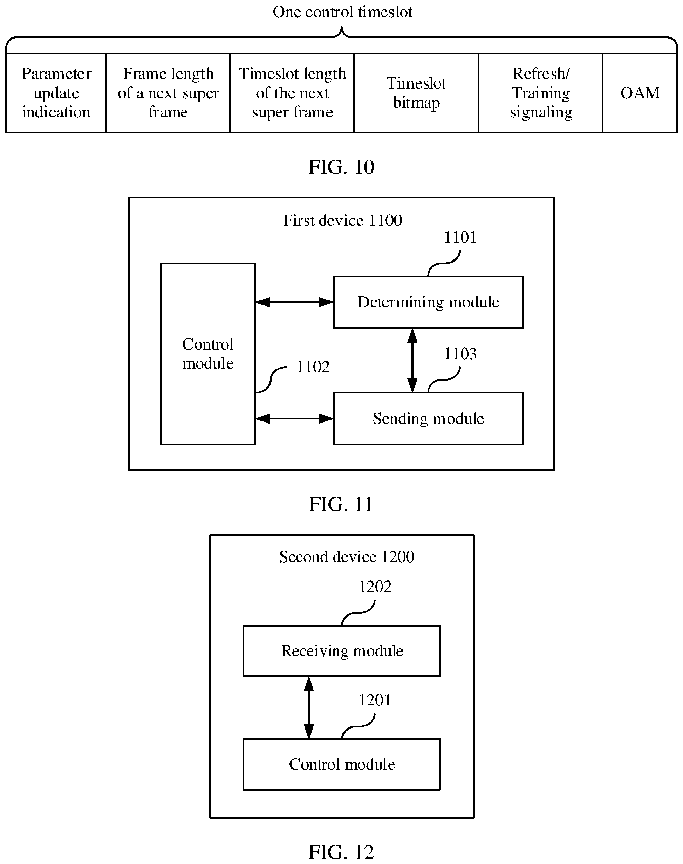

In a possible design method, as shown in FIG. 10, the control timeslot is used to send control information of the super frame and/or control information of a next super frame of the super frame.

In addition, the control timeslot may be further used to send at least one of refresh/training signaling, operations, administration and maintenance OAM information, and the service data of the constant-rate service. The control information may indicate, in a timeslot bitmap (bitmap) manner, an occupation status of each timeslot included in a current super frame. For example, a binary digit 1 may be used to indicate that one timeslot is occupied, and a binary digit 0 may be used to indicate that one timeslot is idle.

In addition, as shown in FIG. 10, the control timeslot may further carry a one-bit or multi-bit parameter update indication, and the receiving device may determine, based on the parameter update indication, whether to parse bearer content of the control timeslot and to parse bearer content of a specific field in the control timeslot, to reduce workload of parsing the bearer content of the control timeslot by the receiving device, so as to increase data transmission efficiency.

For example, it is assumed that a value of a parameter update indication of a field is the binary digit 1, it indicates that a super frame parameter carried in the field is updated, and the receiving device needs to parse the field. If the value of the parameter update indication of the field is the binary digit 0, it indicates that the super frame parameter carried in the field is not updated, and the receiving device does not need to parse the field.

For example, the control information is used to indicate information such as the frame length, the timeslot length, the quantity of timeslots, and timeslot configuration information of the super frame. The information such as the frame length, the timeslot length, the quantity of timeslots, and the timeslot configuration information of the super frame is indicated in a plurality of manners. For example, if the frame length and the quantity of timeslots are indicated, the timeslot length may be implicitly indicated. The timeslot configuration information is a quantity of timeslots in the one or two active periods, and correspondingly, duration of the active period and duration of the idle period can also be obtained. Alternatively, the timeslot configuration information is the duration of the idle period, and correspondingly, the duration of the active period can also be calculated. For another example, if the quantity of timeslots and the timeslot length are indicated, the frame length is implicitly indicated. Alternatively, if the frame length and the timeslot length are indicated, the quantity of timeslots is implicitly indicated. It should be noted that to facilitate timely adjustment of the receiving device, the sending device may notify, in advance, a new super frame parameter and a quantity of remaining cycles. For example, when the quantity of remaining cycles is 5, it indicates that the new super frame parameter starts to be used after five rounds of transmission performed by using the current super frame.

Further, a bitmap manner may be used to carry a parameter update indication for each field included in the control timeslot.

It should be noted that each of the control timeslots of the super frames shown in FIG. 5 and FIG. 6 is an earliest timeslot in the super frame. It should be understood that when a relatively large amount of control information data needs to be sent, a plurality of control timeslots may alternatively be configured for the super frame. Therefore, optionally, the control timeslot may alternatively be a plurality of earliest timeslots in the super frame.

Further, all idle timeslots in one super frame may be configured together. To be specific, all idle timeslots in one super frame form a time-continuous idle time period, so that the sending device enters the sleep state in the idle time period, to reduce power consumption and save energy.

In a possible design method, the one active period is the first active period. Correspondingly, that the idle period is continuous with the one or two active periods may include:

The first active period PA 1 is continuous with the idle period, and the first active period is before the idle period.

Optionally, the first active period may include the reserved timeslot. The reserved timeslot is used to send constant-rate service data.

Optionally, the first active period may further include the non-reserved timeslot. The reserved timeslot is continuous with the non-reserved timeslot, the reserved timeslot is before the non-reserved timeslot, and the non-reserved timeslot is used to send variable-rate service data.

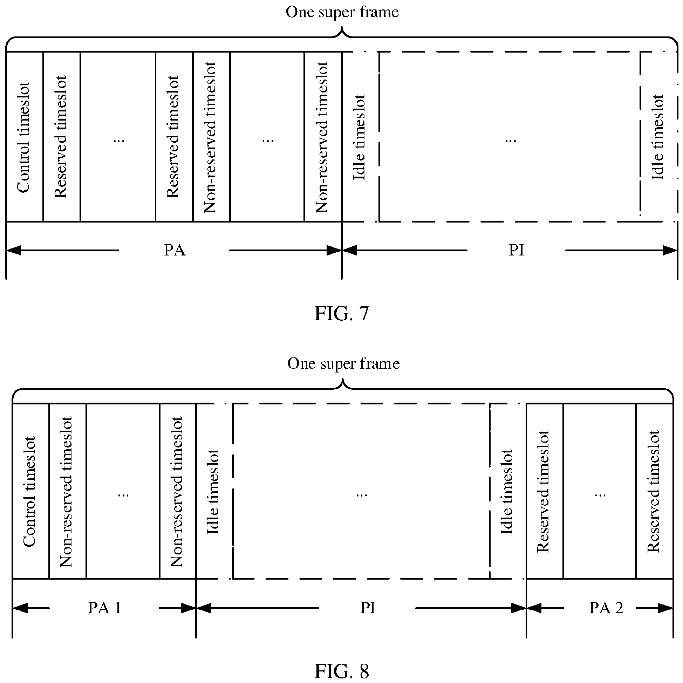

For example, as shown in FIG. 7, one super frame includes an active period PA 1 and an idle period PI, and the PA 1 and the PI are continuous in time. After sending data during the PA 1 period, the sending device may enter the sleep state during the PI period to save energy. The PA 1 includes a plurality of reserved timeslots and a plurality of non-reserved timeslots that are respectively used to send constant-rate service data and variable-rate service data. It is easily understood that, to ensure transmission of the variable-rate service data, a specific margin needs to be reserved for a quantity of non-reserved timeslots configured in different super frames. In other words, the quantity of configured non-reserved timeslots is usually greater than a quantity of timeslots actually required by the variable-rate service data. In this embodiment of this application, for each super frame, an amount of to-be-sent data may be learned before a frame header moment of the super frame, and certainly, an amount of to-be-sent variable-rate service data is also included. Therefore, after all the variable-rate service data is sent in some non-reserved timeslots, the sending device may alternatively enter the sleep state in advance, to further improve an energy saving effect.

In another possible design method, the two active periods are the first active period and a second active period. Correspondingly, that the idle period is continuous with the one or two active periods may include:

Both the first active period and the second active period are continuous with the idle period, the idle period is between the first active period and the second active period, and the first active period is before the second active period.

Optionally, the second active period of the super frame is continuous with a first active period of the next super frame of the super frame.

Optionally, the first active period includes the non-reserved timeslot and does not include the reserved timeslot, and the second active period includes a reserved timeslot and does not include a non-reserved timeslot. The reserved timeslot is used to send constant-rate service data, and the non-reserved timeslot is used to send variable-rate service data.

For example, as shown in FIG. 8, one super frame includes a first active period PA 1, a second active period PA 2, and an idle period PI. The PI is located between the PA 1 and the PA 2, and is separately continuous with the PA 1 and the PA 2 in time. In addition, the PA 1 includes a control timeslot and a non-reserved timeslot, and does not include a reserved timeslot, and the PA 2 includes only a reserved timeslot, and does not include a non-reserved timeslot. It is easily understood that after sending variable-rate service data during the PA 1 period, the sending device may enter the sleep state during the PI period to save energy. Certainly, similar to a case of sending the variable-rate service data shown in FIG. 7, after all the variable-rate service data is sent during the PA 1 period shown in FIG. 8, the sending device may alternatively enter the sleep state in advance to save energy. Then, constant-rate service data is sent during the PA 2 period.

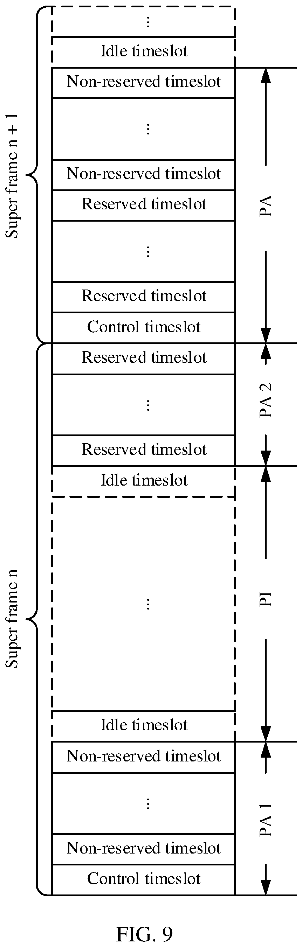

It should be noted that, when a frame structure of the super frame shown in FIG. 8 is used, as shown in FIG. 9, for two adjacent super frames: the super frame n and the super frame n + 1, a second active period PA 2 of a previous super frame, namely, the super frame n, and a first active period PA 1 of a next super frame, namely, the super frame n + 1 are continuous in time. Therefore, for a specified time period with relatively long duration or a specified time period including a relatively large quantity of super frames, a quantity of state switching times performed by the sending device between an active state and the sleep state is still relatively small. This can also achieve a relatively good energy saving effect.

In addition, frame formats of different super frames may alternatively be dynamically adjusted or configured based on an actual situation. For example, as shown in FIG. 9, a frame format of the super frame n is a frame format shown in FIG. 8, and a frame format of the super frame n + 1 is a frame format shown in FIG. 7.

S402: The first device sends data in the one or two active periods, and enters a sleep state in the idle period.

Optionally, if the first device does not send the data in the non-reserved timeslot, the first device may enter the sleep state in advance, to further improve an energy saving effect.

S403: The second device receives the data in the one or two active periods, and enters a sleep state in the idle period.

Optionally, if the second device does not receive the data in the non-reserved timeslot, the second device may also enter the sleep state in advance, to further improve an energy saving effect.

According to the data transmission method provided in this application, the idle period and the one or two active periods included in the super frame can be dynamically determined. Then, the data is transmitted in the active period, and the sleep state is entered in the idle period, to reduce energy consumption of the first device and the second device. In other words, in one super frame, there are only two states: a working state (the active period) and a sleep state (the idle period), and there is no transition state. Therefore, resources occupied by the transition state and energy consumption of the transition state can be reduced, and a quantity of state switching times is relatively small (only once or twice). In this way, a resource waste and relatively high energy consumption that are caused by frequent switching between a plurality of states can be effectively alleviated, data transmission energy consumption can be reduced, and data transmission efficiency can be increased.

The data transmission method provided in the embodiments of this application is described above in detail with reference to FIG. 4 to FIG. 10. The following describes, with reference to FIG. 11 to FIG. 13, a communications device that can perform the foregoing data transmission method according to an embodiment of this application.

FIG. 11 is a schematic structural diagram of a first device according to an embodiment of this application. As shown in FIG. 11, the first device 1100 includes a determining module 1101, a control module 1102, and a sending module 1103.

The determining module 1101 is configured to determine a super frame. The super frame includes one idle period and one or two active periods, and the idle period is continuous with the one or two active periods.

The control module 1102 is configured to control the sending module 1103 to send to-be-sent data in the one or two active periods, and enter a sleep state in the idle period.

In a possible design, the one active period is a first active period. Correspondingly, that the idle period is continuous with the one or two active periods may include: The first active period is continuous with the idle period, and the first active period is before the idle period.

Optionally, the first active period includes a reserved timeslot. The reserved timeslot is used to send constant-rate service data.

Optionally, the first active period may further include a non-reserved timeslot. The reserved timeslot is continuous with the non-reserved timeslot, the reserved timeslot is before the non-reserved timeslot, and the non-reserved timeslot is used to send variable-rate service data.

Optionally, the control module 1102 is further configured to: if the sending module 1103 does not send the data in the non-reserved timeslot, control the sending module 1103 to enter the sleep state in advance, to further improve an energy saving effect.

In another possible design, the two active periods are a first active period and a second active period. Correspondingly, that the idle period is continuous with the one or two active periods may include: Both the first active period and the second active period are continuous with the idle period, the idle period is between the first active period and the second active period, and the first active period is before the second active period.

Optionally, the second active period of the current super frame is continuous with a first active period of a next super frame.

In a possible design, the first active period includes a non-reserved timeslot and does not include a reserved timeslot, and the second active period includes a reserved timeslot and does not include a non-reserved timeslot. The reserved timeslot is used to send constant-rate service data, and the non-reserved timeslot is used to send variable-rate service data.

In a possible design, the super frame includes a control timeslot. The control timeslot is used to send control information of the super frame and/or control information of the next super frame of the super frame.

In addition, the control timeslot may be further used to send at least one of refresh signaling, operations, administration and maintenance OAM information, and service data of a constant-rate service.

Optionally, the control timeslot is at least one earliest timeslot in the super frame.

In a possible design, a frame length of the super frame may be determined according to at least one of a maximum latency of the to-be-sent data or a link refresh cycle.

For example, the frame length of the super frame may be a smaller value in the maximum latency of the to-be-sent data and the link refresh cycle.

Optionally, the to-be-sent data may include a plurality of service types, and the plurality of service types respectively correspond to a plurality of maximum latencies. Correspondingly, the maximum latency of the to-be-sent data is a maximum latency with a smallest value in the plurality of maximum latencies.

In addition, the first device 1100 may further include a storage module (not shown in FIG. 11), configured to store an instruction and data of the first device 1100.

FIG. 12 is a schematic structural diagram of a second device according to an embodiment of this application. As shown in FIG. 12, the second device 1200 includes a control module 1201 and a receiving module 1202.

The control module 1201 is configured to control the receiving module 1202 to receive, only in one or two active periods of a super frame, data sent by a first device, and enter a sleep state in one idle period of the super frame. The idle period is continuous with the one or two active periods.

In a possible design, the one active period is a first active period. Correspondingly, that the idle period is continuous with the one or two active periods may include:

The first active period is continuous with the idle period, and the first active period is before the idle period.

Optionally, the first active period includes a reserved timeslot. The reserved timeslot is used to receive constant-rate service data.

Further, the first active period may include a non-reserved timeslot. The reserved timeslot is continuous with the non-reserved timeslot, the reserved timeslot is before the non-reserved timeslot, and the non-reserved timeslot is used to receive variable-rate service data.

Optionally, if the second device does not receive the data in the non-reserved timeslot, the second device enters the sleep state in advance, to further improve an energy saving effect.

In another possible design, the two active periods are a first active period and a second active period. Correspondingly, that the idle period is continuous with the one or two active periods may include: Both the first active period and the second active period are continuous with the idle period, the idle period is between the first active period and the second active period, and the first active period is before the second active period.

Optionally, the second active period of the super frame is continuous with a first active period of a next super frame of the super frame.

Optionally, the first active period includes a non-reserved timeslot and does not include a reserved timeslot, and the second active period includes a reserved timeslot and does not include a non-reserved timeslot.

The reserved timeslot is used to receive constant-rate service data, and the non-reserved timeslot is used to receive variable-rate service data.

In a possible design, the super frame includes a control timeslot. The control timeslot is used to receive control information of the super frame and/or control information of the next super frame of the super frame.

In addition, the control timeslot may be further used to receive refresh/training signaling, OAM information, and service data of a constant-rate service.

Optionally, the control timeslot is at least one earliest timeslot in the super frame.

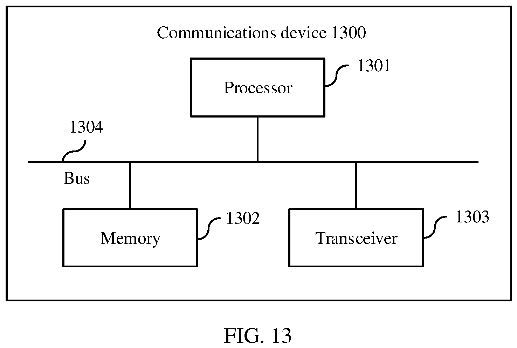

FIG. 13 is a schematic structural diagram of a communications device according to an embodiment of this application. As shown in FIG. 13, the communications device 1300 includes a processor 1301. The processor 1301 is coupled to a memory 1302 and a transceiver 1303.

The memory 1302 is configured to store a computer program.

The processor 1301 is configured to execute the computer program stored in the memory 1302, so that the communications device 1300 performs the data transmission method described in the foregoing method embodiment.

That the processor 1301 is coupled to a memory 1302 and a transceiver 1303 may be that the processor 1301 has a signal connection to the memory 1302 and the transceiver 1303. It should be understood that the memory 1302 may be a memory inside the processor 1301, for example, an internal memory, or may be another memory that is disposed inside the communications device 1300 and that has a signal connection to the processor 1301, or may be a memory that is located outside the communications device 1300 and that has a signal connection to the communications device 1300. This is not limited in this application.

Optionally, as shown in FIG. 13, that the processor 1301 is coupled to a memory 1302 and a transceiver 1303 may be that the processor 1301 is connected to the memory 1302 and the transceiver 1303 through a bus 1304.

Optionally, the transceiver 1303 may be a transceiver circuit or a communications interface, and is configured to communicate with another device, for example, a device in FIG. 1, or communicate with another device in a network.

Optionally, the transceiver 1303 may be an input/output interface, configured to receive an input instruction or output a processing result.

It should be noted that the communications device 1300 may be the first device shown in FIG. 1, or may be the second device shown in FIG. 1, or may be a chip disposed in the first device or the second device. This is not limited in this application.

An embodiment of this application provides a communications system. The communications system includes one or more first devices 1100 and one or more second devices 1200.

An embodiment of this application provides a readable storage medium. The readable storage medium stores a program or an instruction, and when the program or the instruction is run on a computer, the computer is enabled to perform the data transmission method described in the foregoing method embodiment.

An embodiment of this application provides a computer program product, including computer program code. When the computer program code is run on a computer, the computer is enabled to perform the data transmission method described in the foregoing method embodiment.

It should be understood that, the processor in the embodiments of this application may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA), or another programmable logical device, discrete gate or transistor logical device, discrete hardware component, or the like. The general-purpose processor may be a microprocessor, or the processor may be any conventional processor or the like.

It should be further understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of random access memories (random access memory, RAM) may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used to implement the embodiments, the foregoing embodiments may be implemented all or partially in a form of a computer program product. The computer program product includes one or more computer instructions or computer programs. When the program instructions or the computer programs are loaded and executed on a computer, the procedures or the functions according to the embodiments of this application are all or partially generated. The computer may be a general-purpose computer, a special-purpose computer, a computer network, or another programmable apparatus. The computer instructions may be stored in a computer-readable medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship for describing associated objects and represents that three relationships may exist. For example, A and/or B may represent the following three cases: only A exists, both A and B exist, and only B exists. A and B may be singular or plural. In addition, the character "/" in this specification usually represents an "or" relationship between the associated objects, or may represent an "and/or" relationship. A specific meaning depends on a context.

In this application, "at least one" means one or more, and "a plurality of" means two or more. "At least one item (piece) of the following" or a similar expression thereof means any combination of these items, including a singular item (piece) or any combination of plural items (pieces). For example, at least one item (piece) of a, b, or c may represent: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for indicating a computer device (which may be a personal computer, a server, or a network device) to perform all or some of the steps of the method described in the embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application.

Therefore, the protection scope of this application shall be subject to the protection scope of the claims.

## Claims

1. A data transmission method, comprising:
determining (S401), by a first device (1100), a super frame, wherein the super frame comprises one idle period and one or two active periods, and the idle period is continuous with the one or two active periods; and
sending (S402), by the first device (1100), data to a second device (1200) only in the one or two active periods, and entering (S402) a sleep state in the idle period; wherein
determining (S401), by the first device (1100), the super frame comprises determining, based on a service type of to-be-sent data, a maximum latency corresponding to the to-be-sent data, determining a smaller value in the maximum latency and a link refresh cycle as a maximum frame length of the super frame, and determining an actual frame length, a timeslot length of time slots in the super frame, and a quantity of timeslots of the super frame based on a data packet size of the to-be-sent data and the maximum frame length.

2. The data transmission method according to claim 1, wherein the one active period is a first active period; and
that the idle period is continuous with the one or two active periods comprises:
the first active period is continuous with the idle period, and the first active period is before the idle period.

3. The data transmission method according to claim 2, wherein the first active period comprises a reserved timeslot.

4. The data transmission method according to claim 3, wherein the first active period further comprises a non-reserved timeslot, the reserved timeslot is continuous with the non-reserved timeslot, and the reserved timeslot is before the non-reserved timeslot.

5. The data transmission method according to claim 4, wherein the reserved timeslot is used to send constant-rate service data, and the non-reserved timeslot is used to send variable-rate service data.

6. The data transmission method according to claim 4 or 5, wherein if the first device (1100) does not send the data in the non-reserved timeslot, the first device (1100) enters the sleep state in advance.

7. The data transmission method according to claim 1, wherein the two active periods are a first active period and a second active period; and
that the idle period is continuous with the one or two active periods comprises:
both the first active period and the second active period are continuous with the idle period, the idle period is between the first active period and the second active period, and the first active period is before the second active period.

8. A data transmission method, comprising receiving (S403), by a second device (1200) only in one or two active periods of a super frame, data sent by a first device (1100), and entering (S403) a sleep state in one idle period of the super frame, wherein the idle period is continuous with the one or two active periods, the super frame being determined, by the first device (1100), by determining, based on a service type of to-be-sent data, a maximum latency corresponding to the to-be-sent data, determining a smaller value in the maximum latency and a link refresh cycle as a maximum frame length of the super frame, and determining an actual frame length, a timeslot length of time slots in the super frame, and a quantity of timeslots of the super frame based on a data packet size of the to-be-sent data and the maximum frame length.

9. The data transmission method according to claim 8, wherein the one active period is a first active period; and
that the idle period is continuous with the one or two active periods comprises:
the first active period is continuous with the idle period, and the first active period is before the idle period.

10. The data transmission method according to claim 9, wherein the first active period comprises a reserved timeslot.

11. The data transmission method according to claim 10, wherein the first active period further comprises a non-reserved timeslot, the reserved timeslot is continuous with the non-reserved timeslot, and the reserved timeslot is before the non-reserved timeslot.

12. The data transmission method according to claim 11, wherein the reserved timeslot is used to receive constant-rate service data, and the non-reserved timeslot is used to receive variable-rate service data.

13. The data transmission method according to claim 11 or 12, wherein if the second device (1200) does not receive the data in the non-reserved timeslot, the second device (1200) enters the sleep state in advance.

14. A first device (1100), comprising a determining module (1101), a control module (1102), and a sending module (1103), wherein
the determining module (1101) is configured to determine a super frame, wherein the super frame comprises one idle period and one or two active periods, and the idle period is continuous with the one or two active periods; and
the control module (1102) is configured to control the sending module to send data to a second device (1200) only in the one or two active periods, and enter a sleep state in the idle period; wherein
the determining module (1101) is adapted to determine the super frame by determining, based on a service type of to-be-sent data, a maximum latency corresponding to the to-be-sent data, determining a smaller value in the maximum latency and a link refresh cycle as a maximum frame length of the super frame, and determining an actual frame length, a timeslot length of time slots in the super frame, and a quantity of timeslots of the super frame based on a data packet size of the to-be-sent data and the maximum frame length.

15. A second device (1200), comprising a receiving module (1202) and a control module (1201), wherein the control module (1201) is configured to control the receiving module (1202) to receive, only in one or two active periods of a super frame, data sent by a first device (1100), and enter a sleep state in one idle period of the super frame, wherein the idle period is continuous with the one or two active periods, the super frame being determined, by the first device (1200), by determining, based on a service type of to-be-sent data, a maximum latency corresponding to the to-be-sent data, determining a smaller value in the maximum latency and a link refresh cycle as a maximum frame length of the super frame, and determining an actual frame length, a timeslot length of time slots in the super frame, and a quantity of timeslots of the super frame based on a data packet size of the to-be-sent data and the maximum frame length.

## Patentansprüche

1. Datenübertragungsverfahren, umfassend:
Bestimmen (S401) eines Superframes durch eine erste Vorrichtung (1100), wobei der Superframe eine Ruheperiode und eine oder zwei aktive Perioden umfasst und die Ruheperiode mit der einen oder den zwei aktiven Perioden fortlaufend ist; und
Senden (S402) von Daten durch die erste Vorrichtung (1100) an eine zweite Vorrichtung (1200) nur in der einen oder den zwei aktiven Perioden und Eintreten (S402) in einen Schlafzustand in der Ruheperiode; wobei
das Bestimmen (S401) des Superframes durch die erste Vorrichtung (1100) das Bestimmen einer maximalen Latenz, die den zu sendenden Daten entspricht, basierend auf einer Dienstart der zu sendenden Daten, das Bestimmen eines kleineren Wertes in der maximalen Latenz und einem Verbindungsaktualisierungszyklus als maximale Framelänge des Superframes und das Bestimmen einer tatsächlichen Framelänge, einer Zeitschlitzlänge von Zeitschlitzen in dem Superframe und einer Anzahl von Zeitschlitzen des Superframes basierend auf einer Datenpaketgröße der zu sendenden Daten und der maximalen Framelänge umfasst.

2. Datenübertragungsverfahren gemäß Anspruch 1, wobei die eine aktive Periode eine erste aktive Periode ist; und
dass die Ruheperiode kontinuierlich mit der einen oder den zwei aktiven Perioden fortlaufen ist, umfasst:
dass die erste aktive Periode fortlaufend mit der Ruheperiode ist und die erste aktive Periode vor der Ruheperiode liegt.

3. Datenübertragungsverfahren gemäß Anspruch 2, wobei die erste aktive Periode einen reservierten Zeitschlitz umfasst.

4. Datenübertragungsverfahren gemäß Anspruch 3, wobei die erste aktive Periode ferner einen nicht reservierten Zeitschlitz umfasst, der reservierte Zeitschlitz fortlaufend mit dem nicht reservierten Zeitschlitz ist und der reservierte Zeitschlitz vor dem nicht reservierten Zeitschlitz liegt.

5. Datenübertragungsverfahren gemäß Anspruch 4, wobei der reservierte Zeitschlitz zum Senden von Dienstdaten mit konstanter Rate und der nicht reservierte Zeitschlitz zum Senden von Dienstdaten mit variabler Rate verwendet wird.

6. Datenübertragungsverfahren gemäß Anspruch 4 oder 5, wobei, wenn die erste Vorrichtung (1100) die Daten nicht in dem nicht reservierten Zeitschlitz sendet, die erste Vorrichtung (1100) im Voraus in den Schlafzustand eintritt.

7. Datenübertragungsverfahren gemäß Anspruch 1, wobei die beiden aktiven Perioden eine erste aktive Periode und eine zweite aktive Periode sind; und
dass die Ruheperiode kontinuierlich mit der einen oder den zwei aktiven Perioden fortlaufen ist, umfasst:
dass sowohl die erste aktive Periode als auch die zweite aktive Periode fortlaufend mit der Ruheperiode sind, die Ruheperiode zwischen der ersten aktiven Periode und der zweiten aktiven Periode liegt und die erste aktive Periode vor der zweiten aktiven Periode liegt.

8. Datenübertragungsverfahren, umfassend das Empfangen (S403) von durch eine erste Vorrichtung (1100) gesendeten Daten durch eine zweite Vorrichtung (1200) nur in einer oder zwei aktiven Perioden eines Superframes und das Eintreten (S403) in einen Ruhezustand in einer Ruheperiode des Superframes, wobei die Ruheperiode mit der einen oder den zwei aktiven Perioden fortlaufend ist, wobei der Superframe durch die erste Vorrichtung (1100) durch Bestimmen einer maximalen Latenz basierend auf einer Dienstart der zu sendenden Daten, die den zu sendenden Daten entspricht, Bestimmen eines kleineren Wertes in der maximalen Latenz und einem Verbindungsaktualisierungszyklus als maximale Framelänge des Superframes und Bestimmen einer tatsächlichen Framelänge, einer Zeitschlitzlänge von Zeitschlitzen in dem Superframe und einer Anzahl von Zeitschlitzen des Superframes basierend auf einer Datenpaketgröße der zu sendenden Daten und der maximalen Framelänge bestimmt wird.

9. Datenübertragungsverfahren gemäß Anspruch 8, wobei die eine aktive Periode eine erste aktive Periode ist; und
dass die Ruheperiode kontinuierlich mit der einen oder den zwei aktiven Perioden fortlaufen ist, umfasst:
dass die erste aktive Periode fortlaufend mit der Ruheperiode ist und die erste aktive Periode vor der Ruheperiode liegt.

10. Datenübertragungsverfahren gemäß Anspruch 9, wobei die erste aktive Periode einen reservierten Zeitschlitz umfasst.

11. Datenübertragungsverfahren gemäß Anspruch 10, wobei die erste aktive Periode ferner einen nicht reservierten Zeitschlitz umfasst, der reservierte Zeitschlitz fortlaufend mit dem nicht reservierten Zeitschlitz ist und der reservierte Zeitschlitz vor dem nicht reservierten Zeitschlitz liegt.

12. Datenübertragungsverfahren gemäß Anspruch 11, wobei der reservierte Zeitschlitz zum Empfangen von Dienstdaten mit konstanter Rate und der nicht reservierte Zeitschlitz zum Empfangen von Dienstdaten mit variabler Rate verwendet wird.

13. Datenübertragungsverfahren gemäß Anspruch 11 oder 12, wobei, wenn die zweite Vorrichtung (1200) die Daten nicht in dem nicht reservierten Zeitschlitz empfängt, die zweite Vorrichtung (1200) im Voraus in den Schlafzustand eintritt.

14. Erste Vorrichtung (1100), umfassend ein Bestimmungsmodul (1101), ein Steuermodul (1102) und ein Sendemodul (1103), wobei
das Bestimmungsmodul (1101) dazu ausgelegt ist, einen Superframe zu bestimmen, wobei der Superframe eine Ruheperiode und eine oder zwei aktive Perioden umfasst und die Ruheperiode mit der einen oder den zwei aktiven Perioden fortlaufend ist; und das Steuermodul (1102) dazu ausgelegt ist, das Sendemodul so zu steuern, dass es nur in der einen oder den zwei aktiven Perioden Daten an eine zweite Vorrichtung (1200) sendet und in der Ruheperiode in einen Ruhezustand eintritt; wobei
das Bestimmungsmodul (1101) dazu angepasst ist, den Superframe durch Bestimmen einer den zu sendenden Daten entsprechenden maximalen Latenzzeit basierend auf einer Dienstart der zu sendenden Daten, Bestimmen eines kleineren Wertes in der maximalen Latenzzeit und einem Verbindungsaktualisierungszyklus als maximale Framelänge des Superframes und Bestimmen einer tatsächlichen Framelänge, einer Zeitschlitzlänge von Zeitschlitzen in dem Superframe und einer Anzahl von Zeitschlitzen des Superframes basierend auf einer Datenpaketgröße der zu sendenden Daten und der maximalen Framelänge zu bestimmen.

15. Zweite Vorrichtung (1200), umfassend ein Empfangsmodul (1202) und ein Steuermodul (1201), wobei das Steuermodul (1201) dazu ausgelegt ist, das Empfangsmodul (1202) so zu steuern, dass es nur in einer oder zwei aktiven Perioden eines Superframes durch eine erste Vorrichtung (1100) gesendete Daten empfängt und in einer Ruheperiode des Superframes in einen Ruhezustand eintritt, wobei die Ruheperiode mit der einen oder den zwei aktiven Perioden fortlaufend ist, wobei der Superframe durch die erste Vorrichtung (1200) durch Bestimmen einer maximalen Latenz, die den zu sendenden Daten entspricht, basierend auf einer Dienstart der zu sendenden Daten, Bestimmen eines kleineren Wertes in der maximalen Latenz und einem Verbindungsaktualisierungszyklus als maximale Framelänge des Superframes und Bestimmen einer tatsächlichen Framelänge, einer Zeitschlitzlänge von Zeitschlitzen in dem Superframe und einer Anzahl von Zeitschlitzen des Superframes basierend auf einer Datenpaketgröße der zu sendenden Daten und der maximalen Framelänge bestimmt wird.

## Revendications

1. Procédé de transmission de données, comprenant :
la détermination (S401), par un premier dispositif (1100), d'une super-trame, la super-trame comprenant une période inactive et une ou deux périodes actives, et la période inactive étant continue avec la ou les deux périodes actives ; et
l'envoi (S402), par le premier dispositif (1100), de données à un deuxième dispositif (1200) uniquement pendant la ou les deux périodes actives, et l'entrée (S402) dans un état de veille pendant la période inactive ;
la détermination (S401), par le premier dispositif (1100), de la super-trame comprenant la détermination, sur la base d'un type de service de données à envoyer, d'une latence maximale correspondant aux données à envoyer, la détermination d'une valeur plus petite dans la latence maximale et d'un cycle de rafraîchissement de liaison comme une longueur de trame maximale de la super-trame, et la détermination d'une longueur de trame réelle, d'une longueur d'intervalle de temps des intervalles de temps dans la super-trame, et d'une quantité d'intervalles de temps de la super-trame sur la base d'une taille de paquet de données des données à envoyer et de la longueur de trame maximale.

2. Procédé de transmission de données selon la revendication 1, la période active étant une première période active ; et
le fait que la période inactive est continue avec la ou les deux périodes actives comprenant :
la première période active étant continue avec la période inactive, et la première période active étant avant la période inactive.

3. Procédé de transmission de données selon la revendication 2, la première période active comprenant un intervalle de temps réservé.

4. Procédé de transmission de données selon la revendication 3, la première période active comprenant en outre un intervalle de temps non réservé, l'intervalle de temps réservé étant continu avec l'intervalle de temps non réservé, et l'intervalle de temps réservé étant avant l'intervalle de temps non réservé.

5. Procédé de transmission de données selon la revendication 4, l'intervalle de temps réservé étant utilisé pour envoyer des données de service à débit constant, et l'intervalle de temps non réservé étant utilisé pour envoyer des données de service à débit variable.

6. Procédé de transmission de données selon la revendication 4 ou 5, si le premier dispositif (1100) n'envoie pas les données pendant l'intervalle de temps non réservé, le premier dispositif (1100) entrant dans l'état de veille à l'avance.

7. Procédé de transmission de données selon la revendication 1, les deux périodes actives étant une première période active et une deuxième période active ; et
le fait que la période inactive est continue avec l'une ou les deux périodes actives comprenant :
la première période active et la deuxième période active étant toutes deux continues avec la période inactive, la période inactive étant entre la première période active et la deuxième période active, et la première période active étant avant la deuxième période active.

8. Procédé de transmission de données, comprenant la réception (S403), par un deuxième dispositif (1200) uniquement pendant une ou deux périodes actives d'une super-trame, de données envoyées par un premier dispositif (1100), et l'entrée (S403) dans un état de veille pendant une période inactive de la super-trame, la période inactive étant continue avec la ou les deux périodes actives, la super-trame étant déterminée, par le premier dispositif (1100), en déterminant, sur la base d'un type de service de données à envoyer, une latence maximale correspondant aux données à envoyer, en déterminant une valeur plus petite dans la latence maximale et un cycle de rafraîchissement de liaison comme une longueur de trame maximale de la super-trame, et en déterminant une longueur de trame réelle, une longueur d'intervalles de temps des intervalles de temps dans la super-trame, et une quantité d'intervalles de temps de la super-trame sur la base d'une taille de paquet de données des données à envoyer et de la longueur de trame maximale.

9. Procédé de transmission de données selon la revendication 8, la période active étant une première période active ; et
le fait que la période inactive est continue avec la ou les deux périodes actives comprenant :
la première période active étant continue avec la période inactive, et la première période active étant avant la période inactive.

10. Procédé de transmission de données selon la revendication 9, la première période active comprenant un intervalle de temps réservé.

11. Procédé de transmission de données selon la revendication 10, la première période active comprenant en outre un intervalle de temps non réservé, l'intervalle de temps réservé étant continu avec l'intervalle de temps non réservé, et l'intervalle de temps réservé étant avant l'intervalle de temps non réservé.

12. Procédé de transmission de données selon la revendication 11, l'intervalle de temps réservé étant utilisé pour recevoir des données de service à débit constant, et l'intervalle de temps non réservé étant utilisé pour recevoir des données de service à débit variable.

13. Procédé de transmission de données selon la revendication 11 ou 12, si le deuxième dispositif (1200) ne reçoit pas les données pendant l'intervalle de temps non réservé, le deuxième dispositif (1200) entrant dans l'état de veille à l'avance.

14. Premier dispositif (1100), comprenant un module de détermination (1101), un module de commande (1102) et un module d'envoi (1103),
le module de détermination (1101) étant configuré pour déterminer une super-trame, la super-trame comprenant une période inactive et une ou deux périodes actives, et la période inactive étant continue avec la ou les deux périodes actives ; et
le module de commande (1102) étant configuré pour commander le module d'envoi afin d'envoyer des données à un deuxième dispositif (1200) uniquement pendant la ou les deux périodes actives, et d'entrer dans un état de veille pendant la période inactive ; le module de détermination (1101) étant adapté pour déterminer la super-trame en déterminant, sur la base d'un type de service de données à envoyer, une latence maximale correspondant aux données à envoyer, en déterminant une valeur plus petite dans la latence maximale et un cycle de rafraîchissement de liaison comme une longueur de trame maximale de la super-trame, et en déterminant une longueur de trame réelle, une longueur d'intervalle de temps des intervalles de temps dans la super-trame, et une quantité d'intervalles de temps de la super-trame sur la base d'une taille de paquet de données des données à envoyer et de la longueur de trame maximale.

15. Deuxième dispositif (1200), comprenant un module de réception (1202) et un module de commande (1201), le module de commande (1201) étant configuré pour commander le module de réception (1202) afin de recevoir, uniquement pendant une ou deux périodes actives d'une super-trame, des données envoyées par un premier dispositif (1100), et d'entrer dans un état de veille pendant une période inactive de la super-trame, la période inactive étant continue avec la ou les deux périodes actives, la super-trame étant déterminée, par le premier dispositif (1200), en déterminant, sur la base d'un type de service de données à envoyer, une latence maximale correspondant aux données à envoyer, en déterminant une valeur plus petite dans la latence maximale et un cycle de rafraîchissement de liaison comme une longueur de trame maximale de la super-trame, et en déterminant une longueur de trame réelle, une longueur d'intervalle de temps des intervalles de temps dans la super-trame, et une quantité d'intervalles de temps de la super-trame sur la base d'une taille de paquet de données des données à envoyer et de la longueur de trame maximale.
